# EUROPEAN PATENT APPLICATION

(11) **EP 2 354 457 A2**
(43) Date of publication of application: **10.08.2011**
(21) Application number: 10196032.6
(22) Date of filing: 20.12.2010
(51) Int. Cl.: F01D 5/30

(54) **Rotor disk and blade**

(30) Priority: 31.12.2009 US 650913
(71) Applicant: General Electric Company, Schenectady, NY 12345 (US)
(72) Inventor: Metri, Mallikarjun G., 560066 Bangalore (IN); Bracken, Robert J., Schenectady NY 12345 (US); Howes, James R., Bangor ME 04401 (US); Kamran, Mohamed, 560066 Bangalore (IN)
(74) Representative: Szary, Anne Catherine

(57) **Abstract**

A rotor wheel 102 and a rotor blade 104 for use in a turbine engine, the rotor wheel 102 and the rotor blade 104 being configured to comprise a connection formed between a root 106 of the rotor blade 104 and an outer radial portion 108 of the rotor wheel 102 that secures the rotor blade 104 to the rotor wheel 102 during operation of the turbine engine; wherein the connection comprises two or more tangential dovetails 202.

## Description

### BACKGROUND OF THE INVENTION

This present application relates generally to systems and/or apparatus for improving the mechanical integrity and/or assembly of the bladed disk and or rotating parts of turbine engines. (Turbine engines, as used herein and unless specifically stated otherwise, are meant to include all types of turbine or rotary engines, including steam turbines, gas turbines, aircraft engines, power generation engines, and others.) More specifically, but not by way of limitation, the present application relates to the connection made between the rotor wheel and rotor blades that are used in turbine engines.

In general, a steam turbine engine (which, as discussed below, may be used to illustrate an exemplary application of the current invention) includes rows of blades that are axially stacked in stages. Each stage include a row of circumferentially-spaced stator blades, which are fixed, and a row of rotor blades, which are attached to the rotor shaft and rotate about a central axis or shaft. In operation, generally, steam from a source is expanded through series of axially spaced stages to convert the energy contained in the steam into the mechanical energy of the rotating turbine. As part of this process, rotary mechanical energy from the rotating blades is transferred to the rotor shaft though a mechanical connection called dovetail. In this manner, the energy contained in the steam is converted into the mechanical energy of the rotating shaft. This mechanical energy of the rotating shaft may be used to drive a generator for producing electricity, compressors, pumps, fans, etc.

Generally, the mechanical connection between the rotor blades and the rotor wheel/shaft is a critical one. During operation this connection must withstand various mechanical and thermal loads. Prominent among these are centrifugal loads due to the rotation and bending loads due to the differential steam pressure across the stage. In addition to these steady state loads, this mechanical connection also endures cyclical thermo-mechanical loads due to the startup and shutdown processes of the turbine, vibratory loads due to resonance of bucket natural frequency with excitation frequency, and accumulation of creep strains due to prolonged operation at higher temperature. Material strength degrades at higher temperatures, and mechanical connection between the rotating blades and rotor wheel must be strong enough to withstand the aforementioned loads at high temperatures.

Per conventional technology, various types of connections have been employed between the rotor blades and rotor wheel, for example, tangential entry, axial entry, and radial entry single dovetails. Tangential entry dovetails are easy to manufacture and cost effective, but are limited by centrifugal load carrying capacity. These are generally used on smaller blades at high temperature zone and relatively taller blades at low temperature zone of the turbine engine. The axial entry type dovetails are mainly used where tangential entry dovetails are prohibited due to higher centrifugal load and/ or higher operating temperature. Radial entry dovetails (also know as finger type dovetails) are used on taller blades to support very high centrifugal loads. Even though both axial entry type dovetails and finger type dovetails are proven to be effective in high-load conditions, complex manufacturing processes associated with these kind of dovetails lead to relatively high manufacturing costs.

As a result, there is a need for improved apparatus and/or systems relating to a more efficient and cost-effective dovetail connections between the rotor blades and the rotor wheel of turbine engines.

### BRIEF DESCRIPTION OF THE INVENTION

The present application thus describes a rotor wheel and a rotor blade for use in a turbine engine, the rotor wheel and the rotor blade being configured to comprise a connection formed between a root of the rotor blade and an outer radial portion of the rotor wheel that secures the rotor blade to the rotor wheel during operation of the turbine engine; wherein the connection comprises two or more tangential dovetails. In certain embodiments, the connection includes two or more tangential dovetails, the tangential dovetail including a dovetail connection between the rotor blade and rotor wheel that is substantially engaged by sliding the rotor blade tangentially in relation to the rotor wheel. In certain embodiments, the dovetail connection includes a male projection that interlocks within a female groove.

In certain embodiments, the connection includes a plurality of internal dovetails, the internal dovetails including two or more female grooves formed in the rotor wheel engaging the same number of corresponding male projections formed on the root of the rotor blade. In certain embodiments, the female grooves are grooves that, depth wise, extend radially inward into an outer radial surface of the rotor wheel, width wise, extend axially a relatively short distance, and, length wise, extend circumferentially around most of the circumference of the rotor wheel in a continuous manner.

In certain embodiments, the connection includes a plurality of external dovetails, the external dovetails including two or more male projections formed on the rotor wheel engaging the same number of corresponding female grooves formed in the root of the rotor blade. In certain embodiments, the male projections are projections that, height wise, extend radially outward from an outer radial surface of the rotor wheel, width wise, extend axially a relatively short distance, and, length wise, extend circumferentially around most of the circumference of the rotor wheel in a continuous manner.

In certain embodiments, the interlock is formed via portions of the male projection that overlap in axial and radial direction with portions of the female groove. In certain embodiments, the rotor wheel further includes a closure section along a relatively narrow section of the circumference of the rotor wheel, the closure section being configured such that the interlock of the dovetail connection is not present. In certain embodiments, the male projection includes at least one hook that engages at least one hook in the female grove, thereby forming the interlock of the dovetail connection.

The present invention further describes a rotor blade for use in a turbine engine, the rotor blade being configured to make a connection with a rotor wheel, the connection being formed between a root of the rotor blade and an outer radial portion of the rotor wheel and securing the rotor blade to the rotor wheel during operation of the turbine engine. In certain embodiments, the connection includes two or more tangential dovetails, the tangential dovetail including a dovetail connection between the rotor blade and rotor wheel that is substantially engaged by sliding the rotor blade tangentially in relation to the rotor wheel. In certain embodiments, the dovetail connection includes a male projection that interlocks within a female groove.

In certain embodiments, the connection includes a plurality of internal dovetails, the internal dovetails including two or more female grooves formed in the rotor wheel that engage the same number of corresponding male projections formed on the root of the rotor blade. In certain embodiments, the connection includes a plurality of external dovetails, the external dovetails including two or more male projections formed on the rotor wheel that engage the same number of corresponding female grooves formed in the root of the rotor blade.

The present application further describes a rotor wheel for use in a turbine engine, the rotor wheel being configured to make a connection with a plurality of rotor blades, the connection being formed between a root of the rotor blades and an outer radial portion of the rotor wheel and securing the rotor blades to the rotor wheel during operation of the turbine engine; wherein the connection comprises two or more tangential dovetails.

These and other features of the present application will become apparent upon review of the following detailed description of the preferred embodiments when taken in conjunction with the drawings and the appended claims.

### BRIEF DESCRIPTION OF THE DRAWINGS

These and other features of this invention will be more completely understood and appreciated by careful study of the following more detailed description of exemplary embodiments of the invention taken in conjunction with the accompanying drawings, in which:

Figure 1 illustrates a perspective view of a conventional connection.

Figure 2 illustrates a perspective view of a connection according to an embodiment of the present application.

Figure 3 illustrates an exploded view of the connection according to an exemplary embodiment of the present application.

Figure 4 illustrates a perspective view of the connection according to another exemplary embodiment of the present application.

Figure 5 illustrates an exploded view of the connection according to another exemplary embodiment of the present application.

Figure 6 illustrates a perspective view of the connection according to another exemplary embodiment of the present application.

### DETAILED DESCRIPTION OF THE INVENTION

Illustrative embodiments of the invention now will be described more fully hereinafter with reference to the accompanying drawings, in which some, but not all embodiments of the invention are shown. Indeed, the invention may be embodied in many different forms and should not be construed as limited to the embodiments set forth herein; rather, these embodiments are provided so that this disclosure will satisfy applicable legal requirements. Like numbers refer to like elements throughout.

Disclosed herein are rotor blades, rotor wheels or rotor shafts (commonly referred to herein as rotor wheels), and/or the connections made between rotor blades and rotor wheels for use in turbine engines. Various embodiments of the application may include a rotor blade and a rotor wheel connected to each other via two or more tangential dovetails. In certain embodiments of the application, each tangential dovetail may include a dovetail connection between the rotor blade and the rotor wheel, the connection being substantially brought about by sliding the rotor blade in a tangential direction with respect to the rotor wheel. Further, the dovetail connection may include one or more male projections that interlock within corresponding female grooves.

To describe clearly the invention of the current application, it may be necessary to select terminology that refers to and describes certain machine components or parts of a turbine engine. Whenever possible, common industry terminology will be used and employed in a manner consistent with its accepted meaning. However, it is meant that any such terminology be given a broad meaning and not narrowly construed such that the meaning intended herein and the scope of the appended claims is unreasonably restricted. Those of ordinary skill in the art will appreciate that often certain components may be referred to with several different names. In addition, what may be described herein as a single part may include and be referenced in another context as consisting of several component parts, or, what may be described herein as including multiple component parts may be fashioned into and, in some cases, referred to as a single part. As such, in understanding the scope of the invention described herein, attention should not only be paid to the terminology and description provided, but also to the structure, configuration, function, and/or usage of the component as described herein.

In addition, several descriptive terms may be used herein. The meaning for these terms shall include the following definitions. The term "rotor blade", without further specificity, is a reference to rotating blades of either a compressor or a turbine, which include both compressor rotor blades and turbine rotor blades. The term "stator blade", without further specificity, is a reference the stationary blades of either the compressor or the turbine, which include both compressor stator blades and turbine stator blades. The term "blades" will be used herein to refer to either type of blade. Thus, without further specificity, the term "blades" is inclusive to all type of turbine engine blades, including compressor stator blade, compressor rotor blade, turbine stator blade, and turbine rotor blade. Further, as used herein, "downstream" and "upstream" are terms that indicate a direction relative to a flow of working fluid through the turbine. As such, the term "downstream" means the direction of the flow, and the term "upstream" means in the opposite direction of the flow through the turbine engine. Related to these terms, the terms "aft" and/or "trailing edge" refer to the downstream direction, the downstream end and/or in the direction of the downstream end of the component being described. And, the terms "forward" or "leading edge" refer to the upstream direction, the upstream end and/or in the direction of the upstream end of the component being described. The term "radial" refers to movement or position perpendicular to an axis of rotation. It is often required to describe parts that are at differing radial positions with regard to an axis. In this case, if a first component resides closer to the axis than a second component, it may be stated herein that the first component is "inboard" or "radially inward" of the second component. If, on the other hand, the first component resides further from the axis than the second component, it may be stated herein that the first component is "outboard" or "radially outward" of the second component. The term "axial" refers to movement or position parallel to an axis of rotation. And, the term "circumferential" refers to movement or position around an axis of rotation. The term "failure" refers to the inability of the component part to meet its intended function, life, or performance.

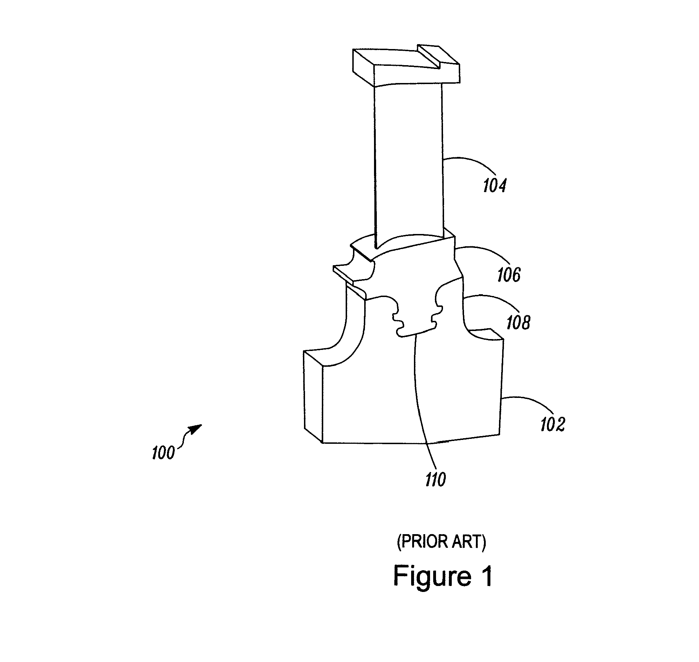

Referring now to the figures, where the various numbers represent like parts throughout the several views, Figure 1 illustrates a perspective view of a conventional connection 100 between a rotor wheel 102 and a rotor blade 104. The connection 100 may be formed between a root 106 of the rotor blade 104 and an outer radial portion 108 of the rotor wheel 102. The connection 100 may include a single tangential dovetail 110. Though the connection 100 is generally cost effective in terms of manufacturing, the connection 100 may have a limited capacity for withstanding high centrifugal loads and/or high operating temperatures. Thus, the connection 100 is generally employed in turbine stages where the centrifugal loads are relatively low, for example, but not limited to, high-pressure stages, later intermediate pressure stages and initial low-pressure stages of the turbine engine. In these stages, the rotor blade 104 may be of short length and consequently, during operation of the turbine engine, the centrifugal loads transmitted to the connection 100 are low. In the case of later low-pressure stages, where the rotor blade 104 may be of longer length, the centrifugal loads transmitted to the connection 100 may be higher and, thus, the conventional connection 100 is susceptible to failure.

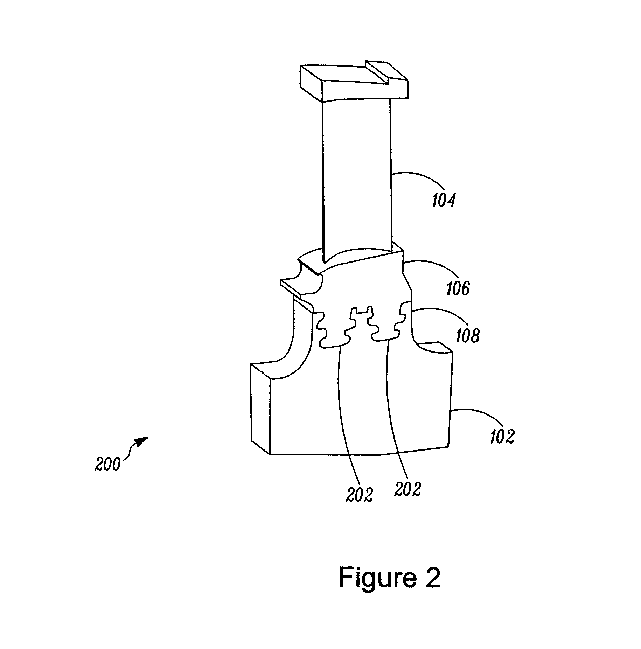

Figure 2 illustrates a perspective view of a connection 200 in accordance with an exemplary embodiment of the present application. The connection 200 may include the rotor wheel 102 with female dovetail groove and the rotor blade 104 with male dovetail projections. In various embodiments of the present application, the rotor wheel 102 and the rotor blade 104 may be used in the compressor or the turbine of the turbine engine. In an embodiment of the present application, the rotor wheel 102 may be an integral rotor shaft or a flat disk disposed around a central shaft of the turbine engine by means of shrinking onto it or bolting or welding and plurality of rotor blades 104 are disposed around a circumference of the rotor wheel 102. There is no limit on the number of rotor blades 104 that may be attached to the rotor wheel 102, the rotor blade 104 illustrated in Figure 2 is only for illustrative purposes and does not limit the scope of the present application.

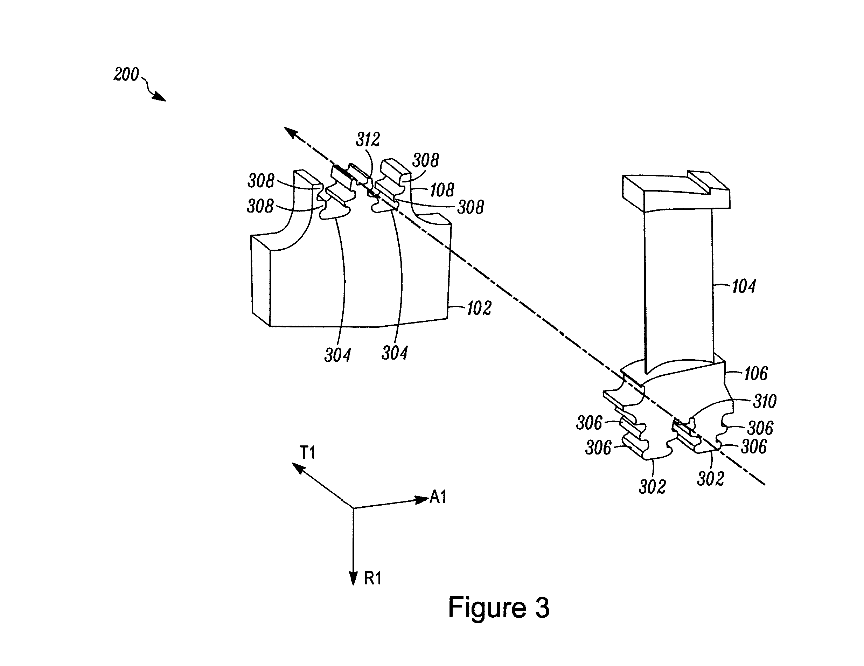

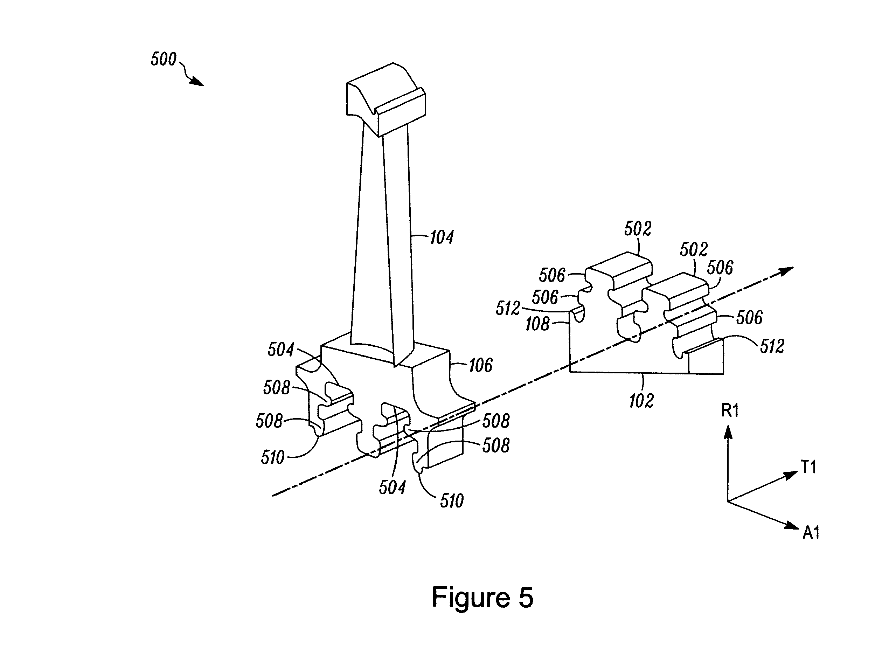

The connection 200 is formed between the root 106 of the rotor blade 104 and the outer radial portion 108 of the rotor wheel 102. In an embodiment of the present application, the connection 200 may include two tangential dovetails 202. In other embodiments of the present application, the connection 200 may include more than two tangential dovetails 202. The number and design of the tangential dovetails 202 may partially depend on a length of the rotor blade 104 and the mechanical loads transmitted to the connection 200 during operation of the turbine engine. In an embodiment of the present application, increasing the number of tangential dovetails 202 to two or more reduces the magnitude of the centrifugal load experienced by individual tangential dovetails 202 and also increases a shear area of the hooks that secure the connection 200 (the hooks are illustrated more clearly in Figures 3 and 5). Thus, in some embodiments of the present application, the connection 200 may be used in low-pressure stages and intermediate-pressure stages of the turbine engine.

Figure 3 illustrates an exploded view of the connection 200 in accordance with an exemplary embodiment of the present application. In an embodiment of the present application, the connection 200 may include two internal dovetails. The internal dovetails may include two male projections 302, which may be provided on the root 106 of the rotor blade 104. Further, corresponding to the male projections 302, two female grooves 304 may be provided in the outer radial portion 108 of the rotor wheel 102. In an embodiment of the present application, two dovetail connections may be formed by sliding the rotor blade 104 in a substantially tangential direction T1 with respect to the rotor wheel 102. In various embodiments of the present application, the sliding may be achieved by a manual or an automated process.

In various embodiments of the present application, the dovetail connections may include an interlocking between the male projections 302 and the corresponding female grooves 304. In an embodiment of the present application, the male projections 302 may be formed by wire electro discharge machining and the female grooves 304 may be formed by a turning operation. However, in other embodiments of the present application, the male projections 302 and the female grooves 304 may be manufactured by other manufacturing operations such as, but not limited to, forging, milling, broaching, casting or the like. Further, the male projections 302 and the female grooves 304 may be made of a material such as, but not limited to, a metal, an alloy of metals, a composite or the like. In an embodiment of the present application, the male projections 302 and the female grooves 304 may include shot peening to improve resistance to stress carrion cracking or fatigue.

In an embodiment of the present application, the internal dovetails may include more than two female grooves 304 formed in the rotor wheel 102 and the same numbers of corresponding male projections 302 on the rotor blade 104. The female grooves 304 may engage with the corresponding male projections 302 to interlock the outer radial portion 108 of the rotor wheel 102 with the root 106 of the rotor blade 104. Thus, the resulting interlock between the male projections 302 and the female grooves 304 may form one or more dovetail connections between the rotor blade 104 and the rotor wheel 102.

In certain embodiments of the present application, as shown in Figure 2, each of the female grooves 304 may extend depth wise in a radially inward direction R1 on the outer radial surface of the rotor wheel 102. Moreover, the female grooves 304 may extend width wise in an axial direction A1. Additionally, the female grooves 304 have a length that may extend continuously around the circumference of the rotor wheel 102. The dimensions of the female grooves 304, for example depth and/or width, may vary according to the mechanical loads to be endured by the internal dovetails during the operation of the turbine engine.

In an embodiment of the present application, the interlocking between the male projections 302 and the female grooves 304 may be formed when certain portions of the male projections 302 overlap with certain portions of the female grooves 304 in the axial direction A1 (and also in the radial direction R1). In an embodiment of the present application, each of the male projections 302 may include one or more hooks 306 for engagement with one or more hooks 308 present in the female grooves 304. The hooks 306 of the male projection 302 and the hooks 308 of the female groove 304 interlock to hold the rotor blade 104 and the rotor wheel 102 together. It will be appreciated that the axial overlap restricts motion of the blade 104 relative to the wheel 102 in the radial direction and the radial overlap restricts motion of the blade 104 relative to the wheel 102 in the axial direction. In some embodiments, tangs 310 also may be provided on the rotor blade 102 that are configured to engage tangs 312 formed one the rotor wheel 102. As shown, the tangs 310 on the rotor blade 104 overlap in the radial direction with the tangs 312 in the rotor wheel 102 to restrict the motion of the blade 104 relative to the wheel 102 in the axial direction.

Further, in certain embodiments of the present application, each of the male projections 302 may be of a substantially symmetrical tree shape with two or more hooks 306 on both sides of the male projections 302 and corresponding two or more hooks 308 are provided in the female grooves 304.

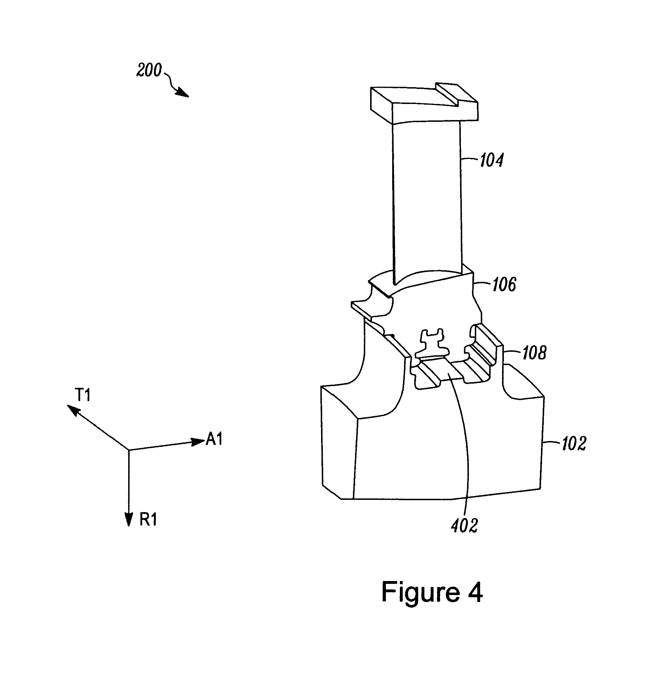

Figure 4 illustrates a perspective view of the connection 200 in accordance with an exemplary embodiment of the present application. In an embodiment of the present application, a closure section (or "gate opening") 402 may be disposed on the outer radial portion 108 along the circumference of the rotor wheel 102. The gate opening 402 may be a slot having a relatively short circumferential length that is sized so that it is sufficient to radially insert a turbine blade 104. The gate opening 402 may include a break in the hooks 308 of the female grooves 304 that, otherwise, would extend continuously around the rest of the circumference of the rotor wheel 102. Thus, the gate opening402 is devoid of the internal dovetail connections formed by the interlocking of the male projections 302 and the corresponding female grooves 304. In an embodiment of the present application, the gate opening 402 may be configured such that it is used for an insertion of the rotor blade 104 in the radially inward direction R1 and then sliding the blade 104 in the substantially tangential direction T1. Once the rotor blade 104 has been affixed in a position on the circumference of the rotor wheel 102, a subsequent rotor blade may be then inserted and slid in a similar manner. After the insertion of all the rotor blades is accomplished, a closure rotor blade (not shown) may be affixed to the gate opening 402 of the rotor wheel 102. In an embodiment of the present application, the closure blade may include a suitable attachment means, such as, but not limited to, keys or pins. For example, in an embodiment of the present application, one or more cross keys may also be utilized to secure the closure blade to the adjacent rotor blades 104.

Figure 5 illustrates an exploded view of a connection 500 in accordance with another exemplary embodiment of the present application. The connection 500 may be disposed between the root 106 of the rotor blade 104 and the outer radial portion 108 of the rotor wheel 102. In an embodiment of the present application, the connection 500 may include two external dovetails including two male projections 502 provided on the outer radial portion 108 of the rotor wheel 102. Further, two female grooves 504 may be provided in the root 106 of the rotor blade 104 corresponding to the male projections 502. In an embodiment of the present application, two dovetail connections may be achieved by sliding the rotor blade 104 in the substantially tangential direction T1 with respect to the rotor wheel 102. The dovetail connections may include an interlocking between the male projections 502 and the female grooves 504.

In certain embodiments of the present application, the external dovetails may include more than two male projections 502 formed on the rotor wheel 102 and the same number of corresponding female grooves 504 formed in the rotor blade 104. The female grooves 504 may engage the corresponding male projections 502 to interlock the root 106 of the rotor blade 104 with the outer radial portion 108 of the rotor wheel 102. The resulting interlock between the male projections 502 and the female grooves 504 may result in dovetail connections between the rotor blade 104 and the rotor wheel 102.

In certain embodiments of the present application, each of the male projections 502 may have a height in the radially outward direction R1 from the outer radial portion 108 of the rotor wheel 102. The male projections 502 may extend width wise in the axial direction A1. Further, the male projections 502 have a length that may extend continuously around the circumference of the rotor wheel 102. The dimensions of the male projections 502, for example depth and/or width, may vary according to the mechanical loads to be endured by the external dovetails during the operation of the turbine engine.

In certain embodiments of the present application, the interlocking between the male projections 502 with the respective female grooves 504 may be formed when certain portions of the male projections 502 overlap with certain portions of the female grooves 504 in the axial direction A1. In an embodiment of the present application, each male projection 502 may include one or more hooks 506 for engagement with hooks 508 in the respective female groove 504. The hooks 506 of the male projection 502 and the hooks 508 of the female projection 504 may interlock to form the external dovetail connection. It will be appreciated that the axial overlap restricts motion of the blade 104 relative to the wheel 102 in the radial direction and the radial overlap restricts motion of the blade 104 relative to the wheel 102 in the axial direction. In some embodiments, tangs 510 also may be provided on the rotor blade 102 that engage tangs 512 formed on the rotor wheel 102. As shown, the tangs 510 on the rotor blade 104 overlap in the radial direction with the tangs 512 in the rotor wheel 102 to restrict the motion of the blade 104 relative to the wheel 102 in the axial direction.

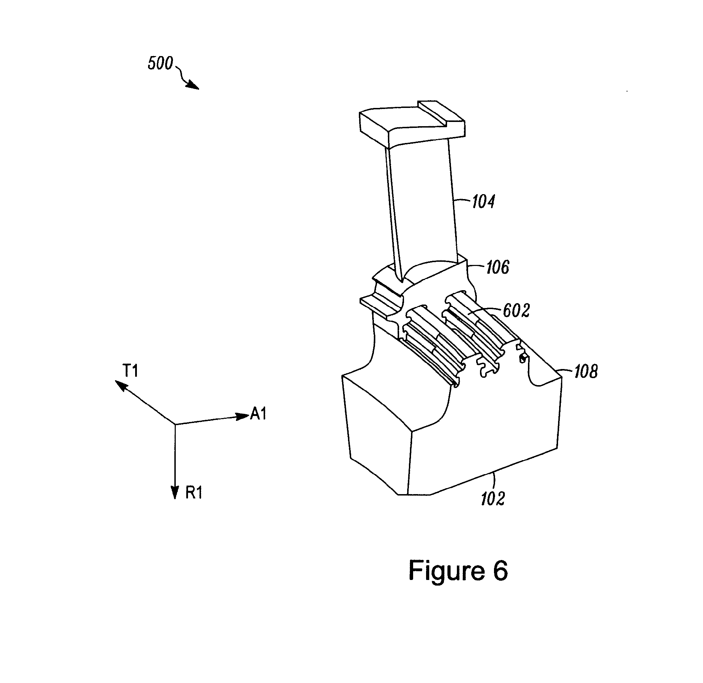

Figure 6 illustrates a perspective view of the connection 500 in accordance with another exemplary embodiment of the present application. The connection 500 may include two tangential dovetails. In various embodiments of the present application, the connection 500 may include more than two tangential dovetails.

In an embodiment of the present application, a closure section (or "gate opening") 602 may be disposed on the outer radial portion 108 along the circumference of the rotor wheel 102. The gate opening 602 may be a slot of a relatively short circumferential length along the rotor wheel 102 that is sufficient to radially insert a blade. The gate opening may include a break in the hooks 506 of the male projections 502 which, otherwise, extend continuously around the rest of the circumference of the rotor wheel 102. Thus, the gate opening 602 is devoid of any dovetail connections formed by the interlocking of the male projections 502 and the corresponding female grooves 504. In an embodiment of the present application, the gate opening 602 may be configured such that it is used for the insertion of the rotor blade 104 in the radial direction R1 and then sliding the blade 104 in the substantially tangential direction T1. Once the rotor blade 104 has been affixed in a position on the circumference of the rotor wheel 102, a subsequent rotor blade 104 may be inserted and slid onto the wheel 102 in a similar manner. After the insertion of all the rotor blades is accomplished in this manner, a closure rotor blade (not shown) may be affixed to the closure section 602 of the rotor wheel 102. In an embodiment of the present application, the closure blade may include a suitable attachment means, for example, but not limited to, keys or pins. For example, in an embodiment of the present application, one or more cross keys may also be utilized to secure the closure blade to the adjacent rotor blades 104.

As one of ordinary skill in the art will appreciate, the many varying features and configurations described above in relation to the several exemplary embodiments may be further selectively applied to form the other possible embodiments of the present application. For the sake of brevity and taking into account the abilities of one of ordinary skill in the art, all of the possible iterations is not provided or discussed in detail, though all combinations and possible embodiments embraced by the several claims below or otherwise are intended to be part of the instant application. In addition, from the above description of several exemplary embodiments of the invention, those skilled in the art will perceive improvements, changes and modifications. Such improvements, changes and modifications within the skill of the art are also intended to be covered by the appended claims. Further, it should be apparent that the foregoing relates only to the described embodiments of the present application and that numerous changes and modifications may be made herein without departing from the spirit and scope of the application as defined by the following claims and the equivalents thereof.
For completeness, various aspects of the invention are now set out in the following numbered clauses:
1. A rotor wheel and a rotor blade for use in a turbine engine, the rotor wheel and the rotor blade being configured to comprise a connection formed between a root of the rotor blade and an outer radial portion of the rotor wheel that secures the rotor blade to the rotor wheel during operation of the turbine engine;
   wherein the connection comprises two or more tangential dovetails.
2. The rotor wheel and rotor blade of clause 1, wherein:
   the tangential dovetail comprises a dovetail connection between the rotor blade and rotor wheel that is substantially engaged by sliding the rotor blade tangentially in relation to the rotor wheel; and
   the dovetail connection comprises a male projection that interlocks within a female groove.
3. The rotor wheel and rotor blade of clause 2, wherein the connection comprises a plurality of internal dovetails, the internal dovetails comprising two or more female grooves formed in the rotor wheel engaging the same number of corresponding male projections formed on the root of the rotor blade.
4. The rotor wheel and rotor blade of clause 3, wherein the female grooves are grooves that, depth wise, extend radially inward into an outer radial surface of the rotor wheel, width wise, extend axially a relatively short distance, and, length wise, extend circumferentially around most of the circumference of the rotor wheel in a continuous manner.
5. The rotor wheel and rotor blade of clause 2, wherein the connection comprises a plurality of external dovetails, the external dovetails comprising two or more male projections formed on the rotor wheel engaging the same number of corresponding female grooves formed in the root of the rotor blade.
6. The rotor wheel and rotor blade of clause 5, wherein the male projections are projections that, height wise, extend radially outward from an outer radial surface of the rotor wheel, width wise, extend axially a relatively short distance, and, length wise, extend circumferentially around most of the circumference of the rotor wheel in a continuous manner.
7. The rotor wheel and rotor blade of clause 2, wherein the interlock is formed via portions of the male projection that overlap in axial and radial direction with portions of the female groove.
8. The rotor wheel and rotor blade of clause 7, wherein the rotor wheel further comprises a closure section along a relatively narrow section of the circumference of the rotor wheel, the closure section being configured such that the interlock of the dovetail connection is not present.
9. The rotor wheel and rotor blade of clause 2, wherein the male projection comprises at least one hook that engages at least one hook in the female grove, thereby forming the interlock of the dovetail connection.
10. The rotor wheel and rotor blade of clause 9, wherein the male projection comprises a substantially symmetrical tree shape, the tree shape having at least two hooks on each side.
11. A rotor blade for use in a turbine engine, the rotor blade being configured to make a connection with a rotor wheel, the connection being formed between a root of the rotor blade and an outer radial portion of the rotor wheel and securing the rotor blade to the rotor wheel during operation of the turbine engine;
   wherein the connection comprises two or more tangential dovetails.
12. The rotor blade of clause 11, wherein:
   the tangential dovetail comprises a dovetail connection between the rotor blade and rotor wheel that is substantially engaged by sliding the rotor blade tangentially in relation to the rotor wheel; and
   the dovetail connection comprises a male projection that interlocks within a female groove.
13. The rotor blade of clause 12, wherein the connection comprises a plurality of internal dovetails, the internal dovetails comprising two or more female grooves formed in the rotor wheel that engage the same number of corresponding male projections formed on the root of the rotor blade.
14. The rotor blade of clause 12, wherein the connection comprises a plurality of external dovetails, the external dovetails comprising two or more male projections formed on the rotor wheel that engage the same number of corresponding female grooves formed in the root of the rotor blade.
15. The rotor blade of clause 12, wherein the interlock is formed via portions of the male projection that overlap in the axial and radial direction with portions of the female groove.
16. The rotor blade of clause 15, wherein the male projection comprises at least one hook that engages at least one hook in the female grove, thereby forming the interlock of the dovetail connection.
17. A rotor wheel for use in a turbine engine, the rotor wheel being configured to make a connection with a plurality of rotor blades, the connection being formed between a root of the rotor blades and an outer radial portion of the rotor wheel and securing the rotor blades to the rotor wheel during operation of the turbine engine;
   wherein the connection comprises two or more tangential dovetails.
18. The rotor wheel of clause 17, wherein:
   the tangential dovetail comprises a dovetail connection between the rotor blades and rotor wheel that is substantially engaged by sliding the rotor blades tangentially in relation to the rotor wheel; and
   the dovetail connection comprises a male projection that interlocks within a female groove.
19. The rotor wheel of clause 18, wherein the connection comprises a plurality of internal dovetails, the internal dovetails comprising two or more female grooves formed in the rotor wheel that engage the same number of corresponding male projections formed on the root of the rotor blades.
20. The rotor wheel of clause 19, wherein the female grooves are grooves that, depth wise, extend radially inward into an outer radial surface of the rotor wheel, width wise, extend axially a relatively short distance, and, length wise, extend circumferentially around most of the circumference of the rotor wheel in a continuous manner.
21. The rotor wheel of clause 18, wherein the connection comprises a plurality of external dovetails, the external dovetails comprising two or more male projections formed on the rotor wheel that engage the same number of corresponding female grooves formed in the root of the rotor blades.
22. The rotor wheel of clause 21, wherein the male projections are projections that, height wise, extend radially outward from an outer radial surface of the rotor wheel, width wise, extend axially a relatively short distance, and, length wise, extend circumferentially around most of the circumference of the rotor wheel in a continuous manner.
23. The rotor wheel of clause 18, wherein the interlock is formed via portions of the male projection that overlap in the axial and radial direction with portions of the female groove.
24. The rotor wheel of clause 23, wherein the male projection comprises at least one hook that engages at least one hook in the female grove, thereby forming the interlock of the dovetail connection, and
   wherein the rotor wheel further comprises a closure section along a relatively narrow section of the circumference of the rotor wheel, the closure section being configured such that the interlock of the dovetail connection is not present.

## Claims

1. A rotor wheel 102 and a rotor blade 104 for use in a turbine engine, the rotor wheel 102 and the rotor blade 104 being configured to comprise a connection formed between a root 106 of the rotor blade 104 and an outer radial portion 108 of the rotor wheel 102 that secures the rotor blade 104 to the rotor wheel 102 during operation of the turbine engine;
wherein the connection includes two or more tangential dovetails 202; the tangential dovetail 202 comprising a dovetail connection between the rotor blade 104 and rotor wheel 102 that is substantially engaged by sliding the rotor blade 104 tangentially in relation to the rotor wheel 102; and
wherein the dovetail connection comprises a male projection 302, 502 that interlocks within a female groove 304, 504.

2. The rotor wheel 102 and rotor blade 104 of claim 1, wherein the connection comprises a plurality of internal dovetails, the internal dovetails comprising two or more female grooves 304, 504 formed in the rotor wheel 102 engaging the same number of corresponding male projections 302, 502 formed on the root 106 of the rotor blade 104.

3. The rotor wheel 102 and rotor blade 104 of claim 2, wherein the female grooves 304, 504 are grooves that, depth wise, extend radially inward into an outer radial surface of the rotor wheel 102, width wise, extend axially a relatively short distance, and, length wise, extend circumferentially around most of the circumference of the rotor wheel 102 in a continuous manner.

4. The rotor wheel 102 and rotor blade 104 of claim 1, wherein the connection comprises a plurality of external dovetails, the external dovetails comprising two or more male projections 302, 502 formed on the rotor wheel 102 engaging the same number of corresponding female grooves 304, 504 formed in the root 106 of the rotor blade 104.

5. The rotor wheel 102 and rotor blade 104 of claim 4, wherein the male projections 302, 502 are projections that, height wise, extend radially outward from an outer radial surface of the rotor wheel 102, width wise, extend axially a relatively short distance, and, length wise, extend circumferentially around most of the circumference of the rotor wheel 102 in a continuous manner.

6. The rotor wheel 102 and rotor blade 104 of claim 1, wherein the interlock is formed via portions of the male projection 302, 502 that overlap in axial and radial direction with portions of the female groove 304, 504.

7. The rotor wheel 102 and rotor blade 104 of claim 6, wherein the rotor wheel 102 further comprises a closure section 402, 602 along a relatively narrow section of the circumference of the rotor wheel 102, the closure section 402, 602 being configured such that the interlock of the dovetail connection is not present.

8. The rotor wheel 102 and rotor blade 104 of claim 1, wherein the male projection 302, 502 comprises at least one hook 306, 506 that engages at least one hook 308, 508 in the female grove, thereby forming the interlock of the dovetail connection.

9. A rotor blade 104 for use in a turbine engine, the rotor blade 104 being configured to make a connection with a rotor wheel 102, the connection being formed between a root 106 of the rotor blade 104 and an outer radial portion 108 of the rotor wheel 102 and securing the rotor blade 104 to the rotor wheel 102 during operation of the turbine engine;
wherein the connection includes two or more tangential dovetails 202, the tangential dovetail 202 comprising a dovetail connection between the rotor blade 104 and rotor wheel 102 that is substantially engaged by sliding the rotor blade 104 tangentially in relation to the rotor wheel 102; and
wherein the dovetail connection comprises a male projection 302, 502 that interlocks within a female groove 304, 504.

10. The rotor blade 104 of claim 9, wherein the connection comprises a plurality of internal dovetails, the internal dovetails comprising two or more female grooves 304, 504 formed in the rotor wheel 102 that engage the same number of corresponding male projections 302, 502 formed on the root 106 of the rotor blade 104.

11. The rotor blade 104 of claim 9, wherein the connection comprises a plurality of external dovetails, the external dovetails comprising two or more male projections 302, 502 formed on the rotor wheel 102 that engage the same number of corresponding female grooves 304, 504 formed in the root 106 of the rotor blade 104.
